# EUROPEAN PATENT APPLICATION

(11) **EP 1 736 532 A1**
(43) Date of publication of application: **27.12.2006**
(21) Application number: 05720854.8
(22) Date of filing: 16.03.2005
(51) Int. Cl.: C11B 15/00, A23D 9/00, A23L 1/00

(54) **METHOD FOR PRODUCING CALCIUM COMPONENT POWDER CONTAINING OIL-SOLUBLE SUBSTANCE**

(30) Priority: 18.03.2004 JP 2004077665
(71) Applicant: Kitii Corporation, Chuo-ku, Tokyo 103-0001 (JP)
(72) Inventor: NAKAHARA, Masaaki, Kanagawa; 2570003 (JP); KUROSAKI, Akihiko;, anagawa;2591131 (JP); OTAKE, Hiroshi;, a 2570004; (JP); KANAI, Hitoshi, 1640011 (JP); YOKOKAWA, Hiroshi;, u, Tokyo;1340083 (JP); KUMABE, Kiyoshi, 2740812 (JP); YANAKA, Hiroyuki;, a-shi, Kanagawa;2220011 (JP)
(74) Representative: Grosse, Rainer
(86) International application number: PCT/JP2005/004600
(87) International publication number: WO 2005/090534

(57) **Abstract**

The present invention provides a method for producing a powder containing an oil-soluble substance, from which substantially no oil-soluble substances are eluted upon application of pressure, heat, or water. The present invention relates to a method for producing a powder containing an oil-soluble substance, which comprises, dispersing an oil-soluble substance and a calcium component in an aqueous solution in the presence of a surfactant, and then drying the thus obtained liquid mixture.

## Description

### TECHNICAL FIELD

The present invention relates to a method for powderizing an oil-soluble substance and a powder containing an oil-soluble substance produced by the method.

### BACKGROUND ART

As methods for powderizing oil-soluble substances, a spray dry method, a method using hardened oil, an encapsulation method, a coating method, and a method for solidifying and gelatinizing oil have been conventionally employed.

There are many case reports concerning technology for powderizing oil-soluble substances by spray-drying. Examples of such methods include a method that involves emulsifying solid edible fats and oils at ordinary temperature together with soluble casein or α-cellulose in an aqueous solution and spray-drying the emulsified liquid, so as to obtain powdery fats and oils (Patent document 1); a method that involves emulsifying liquid fats and oils at ordinary temperature together with a protein such as a casein salt, gelatin, or dried skim milk, a carbohydrate such as dextrin, lactose, or reduced malt sugar, and fiber such as microcrystalline cellulose in an aqueous solution and then spray-drying the emulsified liquid, so as to obtain powdery fats and oils (Patent document 2); a method that involves emulsifying fats and oils in an aqueous solution using an emulsification that is diacetyltartaric acid monoglyceride, a base represented by ammonia, sodium hydroxide, or the like, a salt represented by magnesium hydrogencarbonate, potassium acetate, or the like and then spray-drying the emulsified liquid, so as to obtain powdery fats and oils (Patent document 3); and a method that involves emulsifying fats and oils using starch esterified with octenylsuccinic acid and trehalose without using any proteins and then spray-drying the emulsified liquid, so as to obtain powdery fats and oils (Patent document 4). However, in the case of such powder containing an oil-soluble substance obtained through powderization by spray drying of an emulsified oil-soluble substance, the oil-soluble substance is preserved on a matrix composed of water-soluble base materials including a surfactant, a protein, a sugar, and the like. Hence, in the presence of an aqueous solution, the oil-soluble substance is eluted in the aqueous solution along with a dissolution of such water-soluble base materials. Moreover, a powder containing an oil-soluble substance, which has been powderized together with water-soluble base materials, is easily deformed or disintegrated by physical force. Accordingly, the oil-soluble substance is easily eluted during processing of the substance into a food or the like or pressure treatment in an aqueous solution, for example. Furthermore, in order to maintain powderization, coordinations of the amounts and types of base materials (other than the oil-soluble substance) to be added tend to be complicated. In this case, there is a concern about the effects of addition of the base materials on the oil-soluble substance.

Examples of a method using hardened oil based on technology of solidifying by hydrogenation an oil-soluble substance that is liquid state at ordinary temperature, such as an unsaturated compound include a method that involves hydrogenation in the presence of water using an alloy of aluminium or zinc as a catalyst (Patent document 5); a method that involves hydrogenation in the presence of a calcium compound and a magnesium compound on nickel-copper carbonate as catalysts, and in the presence of a small amount of water if needed (Patent document 6); and a method that involves selectively hydrogenating fats and oils, so as to regulate the saturation degree of unsaturated substances contained therein (Patent document 7). However, an unsaturated compound solidified by hydrogenation is fused by heating, so that it is difficult to handle such compound using temperature changes. Furthermore, while natural fats and oils are generally cis-fatty acids, in the case of hardened oil obtained by hydrogenation, it is known that trans-fatty acid, which is an isomer, tends to be generated. There are many case reports concerning the biological and nutritional effects of trans-fatty acid, such as an increased risk of heart disease due to an increased LDL/HDL ratio (Non-patent document 1) and the hazardous nature of diet foods due to the presence of trans-fatty acid (Non-patent document 2). In 2002, the Institute of Medicine (IOM) of the U.S. National Academy of Sciences (NAS) raised an alarm about the hazardous nature of trans-fatty acid at the request of the U.S. Food and Drug Administration (FDA) and others. A method for suppressing trans-fatty acid generation has been proposed as in Patent document 8, but is not satisfactory. Moreover, the method requires another step, such as a step of spray drying to carry out powderization, which inevitably increases running cost and decreases productivity.

Examples of the many encapsulation methods as powderization technology that have been reported include an interfacial polymerization method that involves encapsulation through a polymerization reaction on the interface; an *in situ* polymerization method that involves biding monomers with each other to generate a polymer of a large molecular weight, thereby causing encapsulation; a submerged drying method that involves deposition of a capsule wall substance to form film, thereby causing encapsulation; a coacervation method that involves causing film formation using the solubility of a capsule wall substance, thereby causing encapsulation; and a method as disclosed in Patent document 9 that involves discharging a capsule wall substance and a filling substance through different openings, mechanically enclosing the filling substance into the capsule wall substance, so as to form a seamless capsule. However, the filling substance enclosed by encapsulation is eluted by capsule wall disintegration due to external physical force or heat, resulting in limited powder processing or handling. Furthermore, microparticulation is generally difficult in the case of such encapsulation method and the productivity of such method is relatively low.

There are many case reports concerning coating methods. Examples of such coating methods based on coating technology for protecting a core substance through coating of a core substance surface with a film forming agent include a flow coating method that involves flowing core substance particles in air and coating the particles with a film forming agent using a spray, for example the Wurster method (Patent document 10), and a pan coating method that involves coating core substance particles with a film-forming agent using a spray while rotating the core substance particles within a container generically called as "pan," as disclosed in Patent document 11. In these methods, core substances should be in a solidified state or a gelatinized state. Therefore, these methods cannot be used for oil-soluble substances that are liquid at ordinary temperature. Furthermore, such film forming agents used for coating easily disintegrate in the face of physical force, heat, an aqueous solution, and the like, resulting in limitation on powder processing methods and handling.

In addition to technology for solidifying fats and oils by hydrogenation, there are many case reports concerning methods based on technology for physically solidifying oil-soluble substances. Examples of such methods include a method that involves adding 12-hydroxystearic acid to fats and oils, and heating, dissolving, and then cooling the resultant, so as to form an oil-soluble crosslinked polymer as disclosed in Patent document 12; a method that involves forming a vinyl polymer of alkyl acrylate having an alkyl group, so as to gelatinize an oil-soluble substance as disclosed in Patent document 13; and a method that involves adding high purity decaglycerin monolaurate with a high monoester content so as to promote crystallization of fats and oils and mesh product formation with a filamentous tissue, thereby solidifying an oil-soluble substance as disclosed in Non-patent document 3. However, these methods are problematic in that they require a separate powderization step after solidification of an oil-soluble substance and in that the resultant is easily deformed or liquefied with the application of pressure or heat.

Powders containing oil-soluble substances obtained by the above-described conventional methods for powderizing oil-soluble substances generally tend to stagnate and to have poor flowability. Furthermore, a grinding or a powderization step is separately required for powderization, which inevitably increases running cost and decreases productivity. Furthermore, most methods that involve removing water from hydrated substances such as an emulsified liquid and then performing powderization depend on a spray drying method. Hence, these methods are also problematic not only in that a drying method is significantly limited, but also because these methods are inappropriate for powderization of oil-soluble substances with high volatility or for powderization of oil-soluble substances that are easily denatured by heat.
Patent document 1: JP Patent Publication (Kokoku) No. 41-1415 B (1966)
Patent document 2: JP Patent Publication (Kokai) No. 50-110403 A (1975)
Patent document 3: JP Patent Publication (Kokai) No. 63-309141 A (1988)
Patent document 4: JP Patent Publication (Kokai) No. 11-318332 A (1999)
Patent document 5: JP Patent Publication (Kokoku) No. 26-2464 B (1951)
Patent document 6: JP Patent Publication (Kokoku) No. 26-3319 B (1951)
Patent document 7: JP Patent Publication (Kokoku) No. 40-5062 B (1965)
Patent document 8: JP Patent Publication (Kokai) No. 59-215397 A (1984)
Patent document 9: JP Patent Publication (Kokoku) No. 36-3700 B (1961)
Patent document 10: U. S. Patent No. 2,648,609
Patent document 11: U. S. Patent No. 3,789,117
Patent document 12: JP Patent Publication (Kokai) No. 55-106298 A (1980)
Patent document 13: JP Patent Publication (Kokai) No. 4-213382 A (1992)
Non-patent document 1: A. Ascherio et al., N. Engl. J. Med. 340, 1994-1998 (1999).
Non-patent document 2: C. M. Oomen et al., Lancet 357,746-751 (2001).
Non-patent document 3: Taketsugu Nakamura, Food Chemical, 17, 59-63 (2001).

### DISCLOSURE OF THE INVENTION

An object of the present invention is to produce a powder containing an oil-soluble substance, which is stable such that an oil-soluble substance is less subject to elution upon application of pressure, heat, water, or the like.

As a result of intensive studies to achieve the above object, the present inventors have discovered that elution of an oil-soluble substance can be prevented by allowing the oil-soluble substance to adsorb on a calcium component in an aqueous solution in the presence of a surfactant. Thus, the present inventors have completed the present invention.

The present invention encompasses the following invention.
(1) A method for producing a powder containing an oil-soluble substance, which comprises dispersing an oil-soluble substance and a calcium component in an aqueous solution in the presence of a surfactant and drying the obtained liquid mixture.
(2) The method according to (1), wherein at least 1 type of sub-base material selected from the group consisting of a thickening and stabilizing agent, a protein, and a salt is further added after addition of the calcium component and before drying of the liquid mixture.
(3) A powder containing an oil-soluble substance, which is obtained by the method according to (1) or (2).
(4) A powder containing an oil-soluble substance, which contains an oil-soluble substance, a calcium component, and a surfactant, wherein the oil-soluble substance is adsorbed to calcium component particles, and from which substantially no oil-soluble substances are eluted in an aqueous solution.

According to the present invention, a powder containing an oil-soluble substance can be obtained, from which substantially no oil-soluble substances are eluted upon application of pressure, heat, or water.

### BRIEF DESCRIPTION OF THE DRAWINGS

Fig. 1 shows an embodiment of the method for producing a powder containing an oil-soluble substance of the present invention.
Fig. 2 shows the principle of repose angles.

This description includes part or all of the contents as disclosed in the description and/or drawings of Japanese Patent Application No. 2004-77665, which is a priority document of the present application.

### BEST MODE OF CARRYING OUT THE INVENTION

The present invention will be described in detail below.

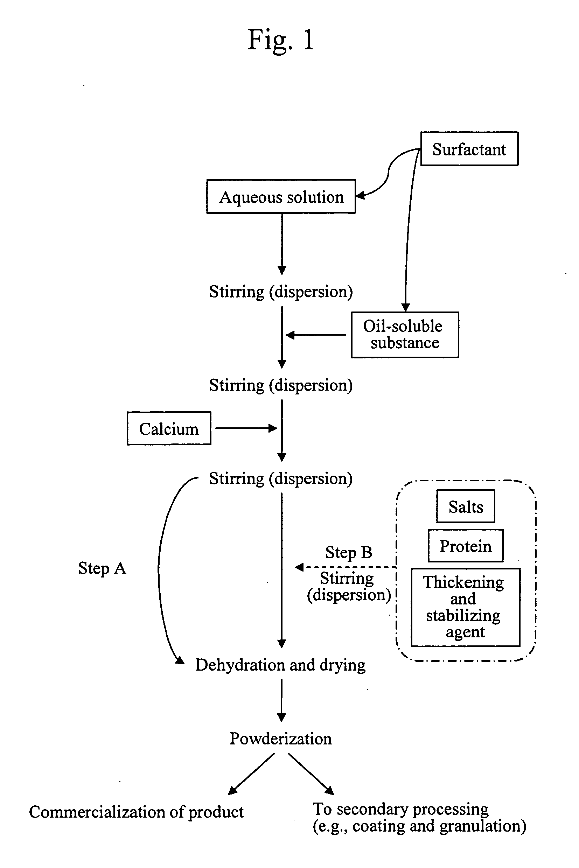

As shown in Fig. 1, the present invention relates to a method for producing a powder containing an oil-soluble substance, which comprises dispersing an oil-soluble substance and a calcium component in an aqueous solution in the presence of a surfactant and then drying the obtained liquid mixture. In the present invention, it is preferable that after an oil-soluble substance is dispersed in an aqueous solution in the presence of a surfactant, a calcium component is then dispersed in the obtained liquid mixture.

In an embodiment of the present invention, a surfactant is added to an aqueous solution, an oil-soluble substance is added and dispersed therein, a calcium component is subsequently added and dispersed therein, and then the thus obtained liquid mixture is dried. In another embodiment of the present invention, a surfactant is added to an oil-soluble substance, the resultant is added and dispersed in an aqueous solution, a calcium component is subsequently added and dispersed therein, and then the thus obtained liquid mixture is dried. Specifically, in the present invention, an oil-soluble substance may be added after addition of a surfactant into an aqueous solution. Alternatively, an oil-soluble substance to which a surfactant has previously been added may be added to an aqueous solution.

In the present invention, an aqueous solution is not particularly limited, as long as it is a solution containing water as a major component. A mixed solution supplemented with other additional components can also be used, as long as the additional components do not inhibit adsorption of an oil-soluble substance to a calcium component. In the present invention, water is preferably used.

The amount of an aqueous solution used in the method for producing a powder of the present invention can be appropriately determined by persons skilled in the art and is not particularly limited. The amount of such aqueous solution is generally 99% by mass or less and preferably 50% to 95% by mass of the total mass of the liquid mixture containing the aqueous solution, a calcium component, a surfactant, and other components.

A calcium component in the present invention means a substance containing a calcium element, such as a calcium salt. A calcium component that can be used in the present invention is not particularly limited as long as it is a calcium component that is hardly-soluble in an aqueous solution. For example, calcium phosphate (excluding calcium primary phosphate, calcium metaphosphate, and the like that are highly-soluble in water), calcium carbonate, calcium oxide, and calcium hydroxide are preferably used.. Specific examples of such calcium component include calcium tartrate, calcium sulfate, calcium pyrophosphate, dibasic calcium phosphate, tribasic calcium phosphate, tetracalcium phosphate, octacalcium phosphate, hydroxyapatite, calcium carbonate, calcium oxalate, calcium hydroxide, carboxy methylcellulose calcium, calcium citrate, calcium dihydrogen pyrophosphate, calcium oxide, and 5'-ribonucleotide calcium. In the present invention, the use of calcium carbonate is particularly preferable.

Any of the above calcium components that have been chemically synthesized, derived from minerals, or derived from the nature can be used. Examples of chemically synthesized calcium components include calcium citrate, calcium gluconate, calcium hydroxide, calcium carbonate, calcium pantothenate, calcium dihydrogen pyrophosphate, tribasic calcium phosphate, dibasic calcium phosphate, and hydroxyapatite, which can be chemically synthesized. Examples of calcium components derived from minerals include calcium carbonate, calcium sulfate, and calcium phosphate, which are obtained from marble, limestone, gypsum, rock phosphate, and the like. Furthermore, examples of naturally-derived calcium components that can be used include calcined calcium, non-calcined calcium, and calcium phosphate, such as calcined calcium of oyster shell, non-calcined calcium of oyster shell, calcined calcium of sea urchin shell, non-calcined calcium of sea urchin shell, calcined calcium of scallop shell, non-calcined calcium of scallop shell, calcined calcium of egg shell, non-calcined calcium of egg shell, calcined calcium of coral, non-calcined calcium of coral, calcium of cattle bone meal, calcium of pig bone meal, calcium of fish bone meal, and dolomite. These calcium components may be used independently, or two or more types of these calcium components may be used in combination.

In the present invention, the above calcium components are generally used in form of particulate. The particle size of a calcium component particle can be appropriately determined depending on intended use of the obtained powder containing an oil-soluble substance and is not particularly limited. The particle size generally ranges from 0.1 µm to 5000 µm, and preferably 1 µm to 100 µm. Furthermore, in the present invention, a porous calcium component is preferably used. Since the porous calcium component has a wide surface area, a powder containing a large amount of an oil-soluble substance can be produced with the use of the component.

A calcium component in the present invention is added in an amount that is generally between 40% and 99% by mass and preferably between 60% and 95% by mass of the total mass of components in a liquid mixture excluding an aqueous solution.

As an oil-soluble substance in the present invention, any known oil-soluble substance that is used in the field of food, feed, cosmetics, pharmaceutical preparations, industries, or the like can be used, regardless of its intended use or type, without particular limitation. Generally, an oil-soluble substance in a liquid state is used. The oil-soluble substance may be a substance that is in a liquid state at ordinary temperature or may be a substance that is fused by heating. As such an oil-soluble substance, hydrocarbons, esters, animal and plant fats and oils, waxes, higher fatty acids, higher alcohols, silicone oils, sterols, resins, and the like, enzymatically-treated product thereof (e.g., hydrolysis or transesterification), chemically-treated product thereof (e.g., transesterification and hydrogenation), dyes, perfumes, various active components of various fields, and the like can be used.

Specific examples of the oil-soluble substances include: hydrocarbons such as gasoline, kerosene, light oils, heavy oil, crude oil, toluene, n-hexane, solvent naphtha, trichloroethylene, spindle oil, machine oil, liquid paraffin, isoparaffin, squalane, and squalene; ester oils such as isopropyl myristate, isopalmityl myristate, 2-octyldodecyl myristate, cetyl 2-ethyl hexanoate, glyceryl tri-2-ethyl hexanoate, glyceryl tri-caprate, neopentylglycol di-2-ethylhexanoate, diisostearyl malate, isononyl isononanoate, cholesteryl 12-hydroxystearate, para-methoxycinnamic acid, glycerin ester of 2-ethylhexanoic acid, and isooctyl para-methoxycinnamate; animal and plant fats and oils such as soybean oil, rape seed oil, corn oil, sunflower oil, peanut oil, rice germ oil, wheat germ oil, adlay oil, macadamia nut oil, garlic oil, camellia oil, palm oil, olive oil, jojoba oil, avocado oil, castor oil, linseed oil, perilla oil, eucalyptus oil, evening primrose oil, lard, tallow, horse oil, fish oil, egg oil, and hardened oils thereof; waxes such as paraffin wax, beeswax, vaseline, carnauba wax, candelilla wax, rice bran wax, Japan tallow, and lanolin; higher fatty acids such as myristic acid, palmitic acid, iso-palmitic acid, stearic acid, iso-stearic acid, oleic acid, linoleic acid, linolenic acid, ricinoleic acid, 12-hydroxystearic acid, arachidonic acid, eicosapentaenoic acid, and docosahexaenoic acid; higher alcohols such as lauryl alcohol, stearyl alcohol, cetyl alcohol, and oleyl alcohol; silicone oils such as dimethylpolysiloxane, methyl phenyl polysiloxane, methylhydrodienepolysiloxane, and octamethylcyclotetrasiloxane; colorants such as β-carotene, paprika pigment, annatto pigment, safrole yellow, riboflavin, lac pigment, curcumin, chlorophyll, and turmeric pigment; flavoring agents such as orange oil, lemon grass oil, laurel leaf oil, cassia oil, cinnamon oil, black pepper oil, calamus oil, sage oil, menthe oil, peppermint oil, rosemary oil, lavender oil, cardamom oil, ginger oil, anise oil, fennel oil, parsley oil, celery oil, cumin oil, coriander oil, callaway oil, rose oil, cypress oil, sandalwood oil, grapefruit oil, lemon oil, lime oil, bergamot oil, onion oil, garlic oil, geranium oil, jasmine oil, fragrant olive oil, menthol, and citral; dyes such as azo dye, anthraquinone dye, indigoid dye, sulfur dye, triphenylmethane dye, pyrazolone dye, stilbene dye, diphenylmethane dye, xanthene dye, alizarin dye, acridine dye, quinonimine dye, thiazole dye, methine dye, nitro dye, and nitroso dye; antioxidants such as ascorbic acid ester, dl-α-tocopherol, dibutyl hydroxytoluene, butylated hydroxyanisole, sophora extract, γ-orizanol, clove extract, gentisic oil, gossypetin, non-saponificated rice bran oil, sesamolin, sesaminol, natural vitamin E, pimenta extract, and gallic acid derivative; medicinal ingredients such as bufexamac, tolfenamic acid, mefenamic acid, flufenamic acid, salicylic acid, aspirin, sasapyrine, alclofenac, suprofen, ibuprofen, naproxen, flurbiprofen, ketoprofen, fenbufen, glycyrrhetic acid, indomethacin, acemetacin, metiazinic acid, protizinic acid, sulindac, pranoprofen, fentiazac, diflunisal, tiaprofenic acid, and oxaprozin; antifungal agents such as hinokitiol, catechin, epicatechin, epigallocatechin, and epicatechin gallate; pesticides such as 3-methyl-1,5-bis(2,4-xylyl)-triazapentane-1,4-diene, diethyl-(2,4-dichlorophenyl)-thiophosphate, 2-isopropylphenyl-N-methylcarbamate, and 2-chloro-1-(2,4-dichlorophenyl)vinyldimethyl·phosphate; ultraviolet absorbers such as ethyl para-aminobenzoate, octyl para-dimethylaminobenzoate, octyl para-methoxycinnamate, oxybenzone, tetrahydroxybenzophenone, 4-t-butyl-4-methoxy-dibenzoylmethane, octyltriazone, and derivatives thereof; repellents such as N,N-diethyl-m-toluamide, dimethyl phthalate, dibutyl phthalate, 2-ethyl-1,3-hexanediol, di-n-propylisocinchomeronate, p-dichlorobenzene, di-n-butyl succinate, diethylamide caprate, N-propyl acetanilide, β-naphthol, and campher; vitamins such as vitamin A, vitamin D, vitamin E, and vitamin K; and preservatives such as dehydroacetic acid.

These oil-soluble substances may be used independently, or 2 or more types of these oil-soluble substances may be used in combination.

In the present invention, unlike in the case of conventional powderization methods, types of oil-soluble substance are not limited. Thus, the invention can be applied in a very wide variety of fields.

An oil-soluble substance in the present invention is added in an amount generally between 1% and 60% by mass and preferably between 5% and 40% by mass of the total mass of components of a liquid mixture excluding an aqueous solution.

A surfactant used in the present invention is not particularly limited and can be used regardless of its ionicity type and regardless of being ionic or nonionic. Any of anionic surfactants, cationic surfactants, amphoteric surfactants, nonionic surfactants, and the like can be used.

Specific examples of anionic surfactants include fatty acid soaps such as base for soap and sodium laurate, higher alkyl sulfuric ester salts such as sodium dodecyl sulfate and sodium lauryl sulfate, alkyl ether sulfuric ester salts such as polyoxyethylene (hereinafter, abbreviated as POE) triethanolamine lauryl sulfate, higher fatty acid amido sulfonates such as coconut oil fatty acid methyltauride sodium, phosphate ester salts such as POE stearylether phosphate, sulfosuccinates such as sodium di-2-ethylhexyl sulfosuccinate, alkylbenzene sulfonates such as sodium dodecylbenzene sulfonate, N-acylglutamates such as disodium N-stearoyl glutamate, higher fatty acid ester sulfates such as hardened coconut oil fatty acid glycerolsulfate sodium, and sulfonates such as turkey red oil, POE alkyl ether carboxylate, POE alkylallyl ether carboxylate, α-olefin sulfonate, higher fatty acid ester sulfonate, secondary alcohol sulfate, higher fatty acid alkylolamide sulfate, sodium lauroylmonoethanolamide succinate, N-palmitoylaspartic acid ditriethanolamine, and casein sodium.

Examples of cationic surfactants include alkyltrimethylammonium salts such as stearyltrimethylammonium chloride, dialkyldimethylammonium salts such as distearyldimethylammonium chloride, alkylpyridinium salts such as cetyl pyridium chloride, alkyl quaternary ammonium salt, alkyldimethylbenzyl ammonium salt, alkylisoquinolinium salt, dialkyl morphonium salt, POE alkylamine, alkylamine salt, polyamine fatty acid derivative, amyl alcohol fatty acid derivative, benzalkonium chloride, and benzethonium chloride.

Examples of amphoteric surfactants include imidazoline amphoteric surfactants such as N-coconut oil fatty acid acyl-N-carboxymethyl-N-hydroxyethylethylenediamine sodium, betaine amphoteric surfactants such as lauryldimethylaminoacetic acid betaine, and lecithin.

Examples of nonionic surfactants include sorbitan fatty acid esters such as sorbitan monoisostearate and sorbitan sesquioleate, organic acid glycerides such as monoglyceride succinate, glycerol fatty acid esters such as pentaglycerol oleate, propylene glycol fatty acid esters such as propylene glycol monostearate, hardened castor oil derivative, and glycerinalkylether. Further examples of nonionic surfactants include POE sorbitan fatty acid esters such as POE sorbitan monostearate, POE sorbit fatty acid esters such as POE sorbit monooleate, POE glycerol fatty acid esters such as POE glycerol monoisostearate, POE alkylethers such as POE stearylether and POE cholestanolether, POE alkylphenylethers such as POE nonylphenylether, pluaronic types such as pluronic, POE·polyoxypropylene (hereinafter, abbreviated as POP) alkyl ethers such as POE·POP cetyl ether, tetra POE·tetra POP ethylenediamine condensates such as tetronic, and POE castor oil hardened castor oil derivatives such as POE castor oil and POE hardened castor oil, POE beeswax·lanolin derivative, alkanolamide, POE propylene glycol fatty acid ester, POE alkylamine, POE aliphatic amide, sucrose fatty acid ester, POE nonylphenylformaldehyde condensate, alkylethoxydimethylamine oxide, and trioleyl phosphate.

These surfactants may be used independently, or 2 or more types of these surfactants can be used in combination. Moreover, in the present invention, a surfactant is generally added in an amount between 0.01 % and 10% by mass of the total mass of components in the liquid mixture excluding an aqueous solution.

In the present invention, as shown in Step B in Fig. 1, a sub-base material may be further added after dispersion of a calcium component but before drying of the liquid mixture. As a sub-base material, materials that are generally used in the technical field can be used and are not particularly limited. Examples of such sub-base materials include thickening and stabilizing agents, proteins, and salts, which are soluble in an aqueous solution. Examples of thickening and stabilizing agents include polysaccharides such as xanthan gum, guar gum, Locust bean gum, carrageenan, agar, pectin, sodium alginate, and gellan gum. Examples of proteins include albumin, α-lactalbumin, ovalbumin, globulin, β-lactoglobulin, prolamin, erythropoietin, glycinin, lysozyme, and casein. Examples of salts include inorganic salts such as salts of carbonic acid, sulfuric acid, nitric acid, phosphoric acid, and boric acid, organic salts such as salts of chloride, acetic acid, citric acid, succinic acid, malic acid, tartaric acid, and lactic acid, and casein salts. Such sub-base material may be directly added to a liquid mixture, or it may be added in the form of an aqueous solution or an aqueous dispersion.

In cases where aggregate formation is observed after adsorption of an oil-soluble substance to calcium component particles in an aqueous solution in the presence of a surfactant, the aggregate can be dispersed and finely separated by adding the above-described sub-base material.

Stirring conditions in the method of the present invention can be appropriately determined by persons skilled in the art and are not particularly limited. Stirring is carried out at a temperature generally between 20°C and 95°C and preferably between 30°C and 70°C, generally at 1000 rpm to 16000 rpm and preferably 3000 rpm to 10000 rpm.

As a method for drying the thus obtained liquid mixture, methods that are generally used in the field can be used and are not particularly limited. For example, a spray drying method, a freeze-drying method, a vacuum drying method, a heat drying method, a ventilation drying method, a film distillation-drying method, and a microwave irradiation method can be used. In the present invention, the spray drying method and the freeze-drying method are preferably used.

The present invention also relates to a powder containing an oil-soluble substance, which is produced by the above method. The powder containing an oil-soluble substance of the present invention contains the oil-soluble substance, a calcium component, and a surfactant, in which the oil-soluble substance is adsorbed to calcium component particles and from which substantially no oil-soluble substances are eluted in an aqueous solution. It seems to be because the surfactant firmly binds the calcium component particles and the oil-soluble substance. Here, "aqueous solution" means a solution containing water as a major component.

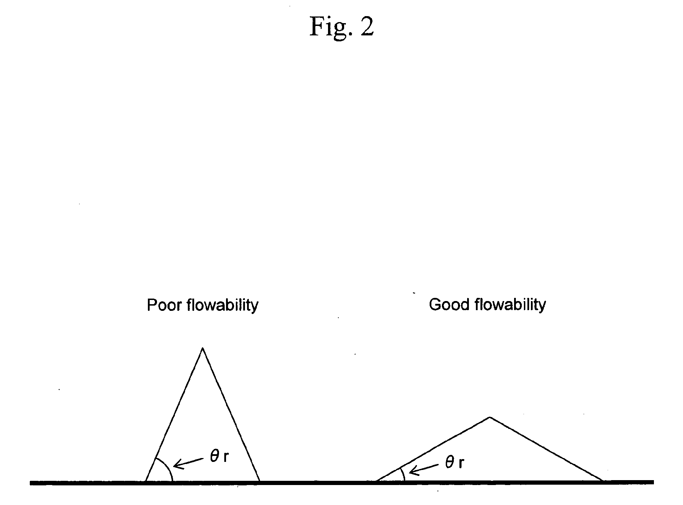

Furthermore, it can be expected for the powder containing an oil-soluble substance of the present invention to possess improved flowability. Specifically, the powder has a small repose angle that is used as one of flowability indices. "Repose angle" means a mean value (θr) obtained by dropping powder from a certain height so that it forms a pile, measuring the pile angle at 3 or more positions, and then calculating the mean value (θr). It can be generally said that the smaller the repose angle and the larger the repose angle index, the better the flowability (see Fig. 2). More specifically, it has been revealed in the case of the powder containing an oil-soluble substance of the present invention that when its repose angle is obtained by an injection method, the repose angle of the powder of the present invention is smaller than that of a conventional powder containing an oil-soluble substance by 5 to 10 θr or more (which thought to constitute a significant difference), or the repose angle index of the powder of the present invention is larger than that of such conventional powder by 5 or more. More specifically, it has also been revealed that compared with a powder that is produced by mixing a surfactant, an oil-soluble substance, a thickening and stabilizing agent, and a sub-base material selected from the group consisting of proteins and salts, adding a calcium component, and then spray-drying the resultant, or compared with a powder that is produced by mixing a surfactant and an oil-soluble substance, adding dextrin, further adding a sub-base material selected from the group consisting of thickening and stabilizing agents, proteins, and salts, and then spray-drying the resultant, the powder containing an oil-soluble substance of the present invention has a repose angle smaller than that of the above powders by 10 θr or more or has a repose angle index larger than that of the above powder by 5 or more, as measured by an injection method.

The powder containing an oil-soluble substance of the present invention has stability against pressure such as a centrifugal force when the powder is dispersed in an aqueous solution. Specifically, when the powder is dispersed in an aqueous solution and a centrifugal force of generally 2000 g or more, preferably 2000 g to 20000 g, and more preferably 2000 g to 12000 g is applied, the powder retains the oil-soluble substance and substantially no oil-soluble substances are eluted from the powder.

The powder containing an oil-soluble substance of the present invention can retain stability over a long time, when it is dispersed in an aqueous solution. Specifically, in an aqueous solution, the powder retains an oil-soluble substance for 24 hours or longer and substantially no oil-soluble substances are eluted from the powder.

The powder containing an oil-soluble substance of the present invention has stability even under high-temperature conditions, when it is dispersed in an aqueous solution. Specifically, the powder retains an oil-soluble substance under temperature conditions ranging from 50°C to 100°C, preferably 70°C to 100°C, and more preferably 90°C to 100°C for 60 minutes or longer, and substantially no oil-soluble substances are eluted from the powder.

The powder containing an oil-soluble substance of the present invention has stability even when it is dried under high temperature conditions and dispersed in an aqueous solution. Furthermore, the powder also has stability when pressure such as a centrifugal force is further applied. The powder containing an oil-soluble substance of the present invention is thought to maintain its stability up to the temperature at which calcium is carbonized.

In this description, the passage "substantially no oil-soluble substance(s) is(are) eluted" means that only 1 % or less and preferably 0.1 % or less of an oil-soluble substance contained in the powder is eluted.

The powder containing an oil-soluble substance of the present invention can be used in its intact (without treatment) state or in a state of being processed (e.g., granular state) for food, cosmetics, pharmaceutical preparations, agricultural chemicals, industrial products, feeds, and the like. The powder containing an oil-soluble substance of the present invention can be used for: noodles and bread (wheat products) such as Japanese wheat noodles, buckwheat noodles, and spaghetti; seasoning agents such as powders and liquid soup, sauce, *miso* (fermented rice or bean paste), mayonnaise, and dressing; dairy products such as baby formula (dried milk), ice cream, yogurt, and cheese; confectioneries such as biscuits, chocolate, candy, caramel candy, and gum; fish cakes such as *chikuwa* (fish sausage) and *kamaboko* (steamed fish paste); frozen foods such as frozen deep-fried foods and frozen fried foods; foods such as ham, sausage, steam-baked meat pie, steamed dumpling, edible oil, butter, margarine, shortenings, beverage, health food, and therapeutic diet; hair cosmetics such as shampoo, conditioner, and hair dressing; skin cosmetics such as skin lotion, milky lotion, cream, foundation, lipstick, anhidrotic, sunburn preventive, insect repellent, and face wash; cosmetics for the mouth such as toothpaste, mouth freshener, and throat wash; further cosmetics such as perfume water, cologne, and bath agent; pharmaceutical preparations and quasi-drugs such as drug for the nervous system, drug for the sense organs, drug for the circulatory organs, drug for the respiratory organs, expectorant, drug for the digestive organs, antiflatuent, immunomodulator, drug for allergies, hormone-like agent, vitamin-like agent, energy drink, antimicrobial agent, and fungicide; fertilizers such as quality-improving agent, agent for preventing physiological disorders, fruit-setting promoter, and disease-resistance-improving agent; agricultural chemicals such as growth retardant, herbicide, pest-controlling agent, and repellent; industrial products such as engine oil, gear oil, cylinder oil, turbine oil, cutting oil, anti-corrosive oil, treated oil, solvent, and grease; and feeds and foods for improving milk quality, egg quality, meat quality, or feed efficiency for animals being raised (including domestic animals, poultry, honey bees, silkworms, and fish), promoting growth in such animals, improving the palatability of such animals, treating and preventing diseases of such animals, and preventing malodor of the feces and urine of such animals, for example.

The powder containing an oil-soluble substance of the present invention contains a calcium component, so that nutrient enrichment can also be expected when the powder is added to a food.

The present invention will now be described in detail by referring to the following examples, but it is not limited by these examples.

### Examples

### <Example 1>

2.1 g of a surfactant, sodium dodecyl sulfate (SDS, for Biochemistry, Wako Pure Chemical Industries, Ltd.), was added to 910.0 g of water. The resultant was then stirred for dissolution using Homomixer (T. K. ROBOMIX, PRIMIX Corporation). 103.2 g of medium chain fatty acid triglyceride (PANACET 810, edible oil, NOF CORPORATION) that had been stained with 0.025% by mass of an oil-soluble dye, Sudan (Sudan III, *guaranteed reagent,* KANTO CHEMICAL CO., INC.) was gradually added to the solution while stirring under conditions of 9,000 rpm for 20 minutes. The oil-soluble Sudan dye used in this example was used as an indicator for the elution of an oil-soluble substance in each evaluation test. After stirring, 238.8 g of chemically synthesized calcium carbonate (PORECAL-N, for food, SHIRAISHI CALCIUM KAISHA, LTD.) was gradually added. After addition, stirring was carried out for several minutes. All steps for stirring were carried out while keeping the temperature at 41 °C. The thus obtained liquid mixture was dried using a freeze dryer (FD-10S, NIHON TECHNO SERVICE CO., LTD).

The following Table 1 shows powder compositions used in the Examples and Comparative examples described below.

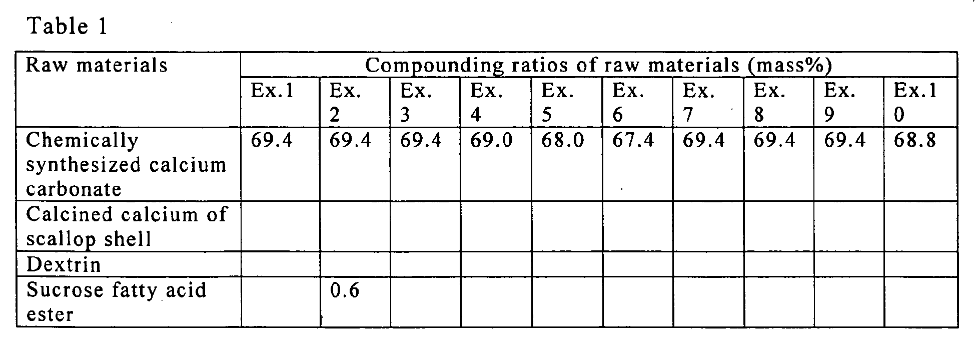

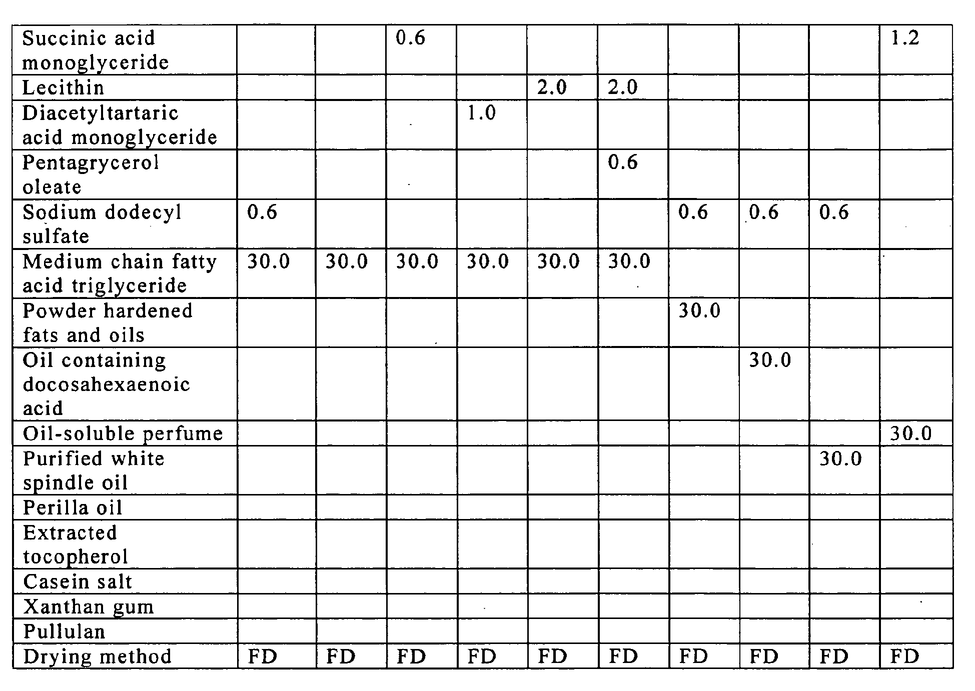

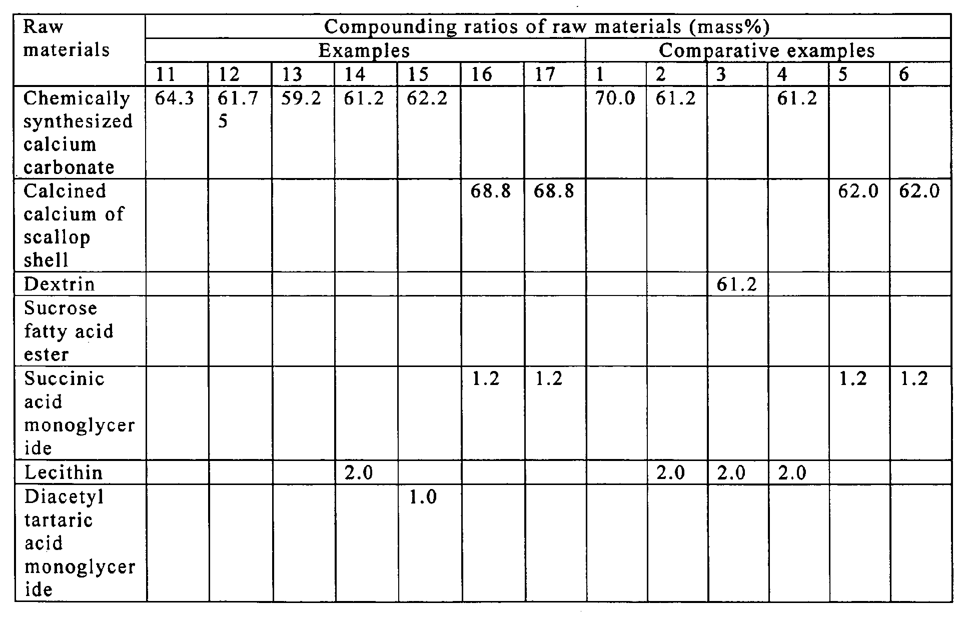

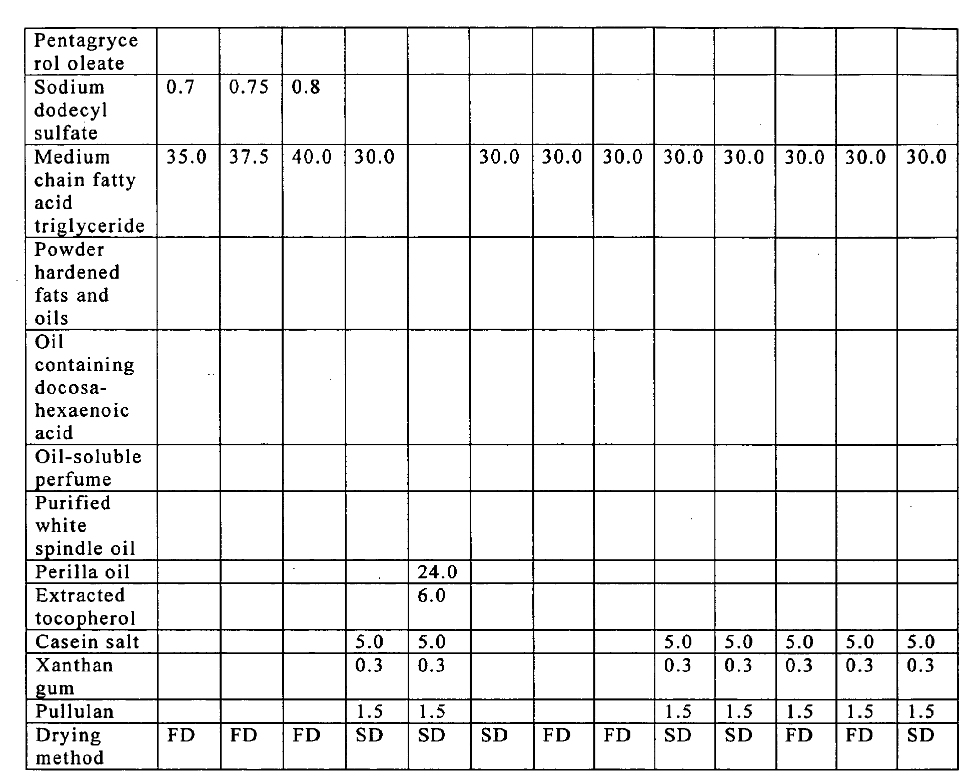

### <Examples 2 to 6>

Solutions were prepared using the surfactants listed in Table 1 (Example 2: sucrose fatty acid ester (S-1670, for food, Mitsubishi-Kagaku Foods Corporation); Example 3: succinic acid monoglyceride (POEM B-10, for food, RIKEN VITAMIN CO., LTD.); Example 4: diacetyltartaric acid monoglyceride (Sunsoft No.641D, for food, Taiyo Kagaku Co., Ltd.); Example 5: lecithin (Sunlecithin A-1, for food, Taiyo Kagaku Co., Ltd.); Example 6: sunlecithin A-1, pentaglycerol oleate (Sunsoft A-173E, for food, Taiyo Kagaku Co., Ltd.)) instead of using the surfactant used in Example 1.

The amount of each surfactant added is shown in Table 1. Regarding Examples 2 and 5, preparation was carried out by adding each base material under preparation conditions similar to those in Example 1. Regarding Examples 3 and 4, preparation was carried out under conditions similar to those in Example 1, except for adding and dissolving a surfactant in the oil-soluble substance PANACET 810, which had been stained with Sudan III, instead of adding the surfactant to an aqueous solution. In case of Example 6, Sunlecithin A-1 was added to an aqueous solution in a manner similar to that in Example 1, Sunsoft A-173E was added to an oil-soluble substance in a manner similar to that in Examples 3 and 4, and stirring was carried out under condition similar to those in Example 1. The thus obtained liquid mixtures were dried using a freeze dryer.

### <Examples 7 to 10>

Solutions were prepared using oil-soluble substances listed in Table 1 (Example 7: powder hardened fats and oils (TP-9, for food, NOF CORPORATION); Example 8: oil containing docosahexaenoic acid (DHA-27MS, for food, Harima Chemicals, Inc); Example 9: refined white spindle oil (AZ sewing machine oil, for industry, AZ, Ltd.); and Example 10: oil-soluble perfume (Lemon perfume, for food, T. HASEGAWA CO., LTD.)), instead of using PANACET 810, the oil-soluble substance used in Example 1. Regarding Examples 7 to 9, preparation was carried out by adding each base material under preparation conditions similar to those in Example 1. Regarding Example 10, preparation was carried out by adding and dissolving POEM B-10 as a surfactant (instead of using SDS) in an oil-soluble lemon perfume that had been stained with Sudan III in a manner similar to that in Example 3, followed by stirring under conditions similar to those in Example 1. The thus obtained liquid mixture was dried using a freeze dryer.

### <Examples 11 to 13>

Preparation was carried out under preparation conditions similar to those in Example 1 except that amounts of the oil-soluble substances are changed as described in Table 1. Each base material is added and the obtained liquid mixtures were dried using a freeze dryer.

### <Example 14>

7.8 g of Sunlecithin A-1 was added to 546.0 g of water and then the resultant was stirred and dissolved using T.K. ROBOMIX. 117.0 g of PANACET 810 that had been stained with 2.0 % by mass of an oil-soluble dye, Astaxanthin (AstaREAL oil 50F, for food, FUJI CHEMICAL INDUSTRY CO., LTD.), was gradually added to the solution while stirring under conditions of 9,000 rpm for 20 minutes. The oil-soluble Astaxanthin dye used in this example was also used as an indicator for the elution of an oil-soluble substance in each evaluation test in a manner similar to that employed for Sudan in the above examples. After stirring, 238.7 g of PORECAL-N was gradually added under the same conditions followed by stirring for 5 minutes. Thus, liquid mixture 1 was obtained. Separately, 19.5 g of casein salt (Alanate #180, for food, NZMP (New Zealand Milk Products)), 5.9 g of pullulan (pullulan PF-20, for food, HAYASHIBARA GROUP), and 1.2 g of xanthan gum (Echogum T, for food, Dainippon Pharmaceutical Co., Ltd.) were added to 364.0 g of water, followed by stirring and dissolution. Hence, liquid mixture 2 was obtained. The liquid mixture 2 was gradually added to and then mixed with the liquid mixture 1 under the same conditions. All steps for stirring were carried out while keeping the temperature at 41°C. After preparation, the liquid mixture was spray-dried using an L-12-type spray dryer (spray dryer, OHKAWARA KAKOHKI CO., LTD.) under conditions of hot air inlet temperature of 180°C, exhaust air outlet temperature of 80°C, and stock solution temperature of 40°C, thereby obtaining a powder.

### <Example 15>

Preparation was carried out under preparation conditions similar to those in Example 14 using: perilla oil (Maruta refined perilla oil, for food, OHTA OIL MILL CO., LTD.) and extracted tocopherol (BK-805, for food, Bizen Chemical Co. Ltd.) as oil-soluble substances instead of using PANACET 810; and using Sunsoft No. 641D as a surfactant instead of using Sunlecithin A-1, as described in Table 1. The surfactant was added to and dissolved in the oil-soluble substances, instead of being adding to an aqueous layer, and resultant was stirred under conditions similar to those in Example 14, thereby preparing a liquid mixture. After preparation, the liquid mixture was spray-dried under the same conditions as those in Example 14.

### <Example 16>

A solution was prepared using as a calcium component base material a calcined calcium powder of scallop shell (Shell Lime HT, for food, Hokkaido Cooperation Lime Corporation) instead of using PORECAL-N under preparation conditions similar to those in Example 3. After preparation, the liquid mixture was spray-dried under conditions that were the same as those in Example 14, thereby obtaining a powder.

### <Example 17>

A liquid mixture was prepared under conditions that were the same as those in Example 16, followed by drying using a freeze dryer, thereby obtaining a powder.

### <Comparative example 1>

A liquid mixture was prepared, without addition of any surfactant, under preparation conditions similar to those in Example 1. After preparation, the liquid mixture was dried using a freeze dryer.

### <Comparative example 2>

7.8 g of Sunlecithin A-1, 19.5 g of Alanate #180, 5.9 g of pullulan PF-20, and 1.2 g of Echogum T were added to 910 g of water. The mixture was stirred for dissolution using T. K. ROBOMIX. Subsequently, 117.0 g of PANACET 810 stained with Astaxanthin with a concentration that was the same as that employed in Example 14 was gradually added while stirring under conditions of 9,000 rpm for 20 minutes. After stirring, 238.7 g of PORECAL-N was gradually added under the same stirring conditions, followed by stirring for 5 minutes. Thus, a liquid mixture was obtained. All steps for stirring were carried out while keeping the temperature at 41°C. After preparation, the liquid mixture was spray-dried using the L-12-type spray dryer under conditions of hot air inlet temperature of 180°C, exhaust air outlet temperature of 80°C, and stock solution temperature of 40°C.

### <Comparative example 3>

A liquid mixture was prepared using dextrin (Pinedex #3, for food, Matsutani Chemical Industry Co., Ltd.) instead of using PORECAL-N with the composition as described in Table 1 and under preparation conditions similar to those in Example 14. After preparation, the liquid mixture was spray-dried under conditions that were the same as those in Example 14.

### <Comparative example 4>

A liquid mixture was prepared under conditions that were the same as those in Comparative example 2. The thus prepared liquid mixture was dried using a freeze dryer.

### <Comparative example 5>

Under preparation conditions similar to those in Comparative example 2, POEM B-10 as a surfactant was added to and dissolved in PANACET 810 stained with Sudan, instead of being added to an aqueous solution. The resultant was then gradually added under the same stirring conditions, and the resultant was stirred. Furthermore, Shell Lime HT was gradually added, instead of adding PORECAL-N, under the same stirring conditions, followed by stirring for 5 minutes. Thus, a liquid mixture was obtained. The thus obtained liquid mixture was dried using a freeze dryer.

### <Comparative example 6>

A liquid mixture was prepared under conditions similar to those in Comparative example 5. The thus obtained liquid mixture was spray-dried under conditions that were the same as those in Comparative example 2.

### <Stability test>

The above-obtained powders were each subjected to the following stability test.

### 1. Measurement of adsorptive power of oil-soluble substances by centrifugation

28.3 g of purified water was added to each of the powders (5.0 g each) obtained in the above Examples and Comparative examples. The mass ratio of each powder in a solution was adjusted to 15.0%. After mixing, each liquid mixture was transferred into a centrifugation tube (3191-335, 50 ml, Ina-optika corporation). The solution was centrifuged using a Micro refrigerated centrifuge (3700, KUBOTA Corporation) with an arbitrary centrifugal force, and then the elution of an oil-soluble substance colored with an oil-soluble dye was observed. Centrifugation was carried out under conditions of 15°C for 10 minutes by applying an arbitrary centrifugal force. The results are shown in Table 2 below.

In Table 2, regarding adsorption, "○" indicates that an oil-soluble substance was adsorbed, "×" indicates that no oil-soluble substances were adsorbed, that is, indicates that in a prepared solution before drying, an oil-soluble substance floated on the upper surface of an aqueous solution or was separated without adhering to a calcium component. Regarding powderization, "○" ind icates that an oil-soluble substance was powderized, "×" indicates that no oil-soluble substances were powderized, and "△" indicates that a generated product was in paste form. Moreover, in the results of the following stability tests 1 to 4, regarding elution, "⊚" indicates that the elution of an oil-soluble substance was never observed, "○" indicates that the elution of an oil-soluble substance was slightly observed, but the powder performance requirements of the present invention were satisfied, and thus it was determined that substantially no elution occurred, "Δ" indicates that the elution of an oil-soluble substance was observed to some extent, and "×" indicates that an oil-soluble substance was almost completely eluted.

**Table 2**

| Examples/Comparative example | Adsorption | Powderization | Centrifugal force(g) | | | | | | | |
|---|---|---|---|---|---|---|---|---|---|---|
| | | | 0 | 500 | 2,000 | 3,000 | 4,000 | 5,000 | 8,000 | 12,000 |
| Example 1 | ○ | ○ | ⊚ | ⊚ | ⊚ | ⊚ | ⊚ | ⊚ | ⊚ | ⊚ |
| Example 2 | ○ | ○ | ⊚ | ⊚ | ⊚ | ⊚ | ⊚ | ⊚ | ⊚ | ⊚ |
| Example 3 | ○ | ○ | ⊚ | ⊚ | ⊚ | ⊚ | ⊚ | ⊚ | ⊚ | ⊚ |
| Example 4 | ○ | ○ | ⊚ | ⊚ | ⊚ | ⊚ | ⊚ | ⊚ | ⊚ | ⊚ |
| Example 5 | ○ | ○ | ⊚ | ⊚ | ⊚ | ⊚ | ⊚ | ⊚ | ○ | ○ |
| Example 6 | ○ | ○ | ⊚ | ⊚ | ⊚ | ⊚ | ⊚ | ⊚ | ⊚ | ○ |
| Example 7 | ○ | ○ | ⊚ | ⊚ | ⊚ | ⊚ | ⊚ | ⊚ | ⊚ | ⊚ |
| Example 8 | ○ | ○ | ⊚ | ⊚ | ⊚ | ⊚ | ⊚ | ⊚ | ⊚ | ⊚ |
| Example 9 | ○ | ○ | ⊚ | ⊚ | ⊚ | ⊚ | ⊚ | ⊚ | ⊚ | ⊚ |
| Example 10 | ○ | ○ | ⊚ | ⊚ | ⊚ | ⊚ | ⊚ | ⊚ | ⊚ | ⊚ |
| Example 14 | ○ | ○ | ⊚ | ⊚ | ○ | ○ | ○ | ○ | ○ | ○ |
| Example 15 | ○ | ○ | ⊚ | ⊚ | ⊚ | ⊚ | ⊚ | ⊚ | ⊚ | ⊚ |
| Example 16 | ○ | ○ | ⊚ | ⊚ | ⊚ | ⊚ | ⊚ | ⊚ | ⊚ | ⊚ |
| Example 17 | ○ | ○ | ⊚ | ⊚ | ⊚ | ⊚ | ⊚ | ⊚ | ⊚ | ⊚ |
| Comparative Example 1 | × | × | × | × | × | × | × | × | × | × |
| Comparative Example 2 | × | ○ | Δ | × | × | × | × | × | × | × |
| Comparative Example 3 | × | ○ | × | × | × | × | × | × | × | × |
| Comparative Example 4 | × | Δ | × | × | × | × | × | × | × | × |
| Comparative Example 5 | × | Δ | Δ | Δ | Δ | Δ | Δ | × | × | × |
| Comparative Example 6 | × | ○ | ⊚ | ○ | Δ | Δ | Δ | × | × | × |

As shown in the results in Table 2, it was revealed that whereas no adsorption of oil-soluble substances had been observed in the cases of powders produced in the Comparative examples, oil-soluble substances had been adsorbed to calcium components in the cases of powders containing oil-soluble substances of the present invention. Furthermore, it was revealed that according to the method of the present invention, oil-soluble substances are powderized well regardless of surfactant type, calcium type, and oil-soluble substance type. Furthermore, in the case of powders containing oil-soluble substances prepared based on the Comparative examples, when a centrifugal force of at least 5,000 g was applied, the oil-soluble substance was eluted in all cases. However, in the cases of the powders containing oil-soluble substances of the present invention, even when a centrifugal force of 12,000 g was applied, substantially no oil-soluble substances were eluted.

Moreover, in Examples 1, 11, 12, and 13, the powders containing oil-soluble substances were produced under the same conditions, except for the contents of oil-soluble substance. The stability of the powders on applying a centrifugal force as described above was tested. The results are shown in Table 3 below.

**Table 3**

| Example/Comparative example | Oil-soluble substance content (% by mass) | Centrifugal force (g) | | | | | |
|---|---|---|---|---|---|---|---|
| | | 2,000 | 3,000 | 4,000 | 5,000 | 8,000 | 12,000 |
| Example 1 | 30.0% | ⊚ | ⊚ | ⊚ | ⊚ | ⊚ | ⊚ |
| Example 11 | 35.0% | ⊚ | ⊚ | ⊚ | ⊚ | ⊚ | ⊚ |
| Example 12 | 37.5% | ⊚ | ⊚ | ⊚ | ⊚ | ⊚ | ⊚ |
| Example 13 | 40.0% | ⊚ | ⊚ | ⊚ | ⊚ | ⊚ | ⊚ |

As shown in Table 3, it was demonstrated that the powders containing oil-soluble substances of the present invention have high ability to retain the oil-soluble substances, regardless of their oil-soluble substance contents, and have stability.

### 2. Stability changes over time in aqueous solution

90.0 g of purified water was added to each of the powders (10.0 g each) obtained in Examples 1, 9, 14, and 17 and Comparative examples 2 and 3. The powder mass ratio in each solution was adjusted to 10.0%. Treatment was carried out under conditions of 30.0°C and 100 rpm for an arbitrary time period using a shake incubator (NTS-1300, TOKYO RIKAKIKAI CO., LTD.). The elutions of the oil-soluble substances colored with the oil-soluble dyes were observed. The results are shown in Table 4 below.

As shown in Table 4, it was demonstrated that the powders containing oil-soluble substances of the present invention retain the oil-soluble substances over a long period of time and thus maintain their stability.

**Table 4**

| Example/Comparative example | Time (h) | | | | | | |
|---|---|---|---|---|---|---|---|
| | 0 | 1 | 2 | 4 | 8 | 16 | 24 |
| Example 1 | ⊚ | ⊚ | ⊚ | ⊚ | ⊚ | ⊚ | ⊚ |
| Example 9 | ⊚ | ⊚ | ⊚ | ⊚ | ⊚ | ⊚ | ⊚ |
| Example 14 | ⊚ | ⊚ | ⊚ | ⊚ | ⊚ | ⊚ | ⊚ |
| Example 17 | ⊚ | ⊚ | ⊚ | ⊚ | ⊚ | ⊚ | ⊚ |
| Comparative example 2 | Δ | × | × | × | × | × | × |
| Comparative example 3 | × | × | × | × | × | × | × |

### 3. Stability in hot water

90.0 g of purified water was added to each of the powders (10.0 g each) obtained in Examples 1, 7, 9, 14, and 17 and Comparative examples 2 and 3. The powder mass ratio in each solution was adjusted to 10.0%. After 30 minutes and 60 minutes of treatment in a warm bath at 90°C, the elution of the oil-soluble substances colored with the oil-soluble dyes was observed. The results are shown in Table 5 below.

**Table 5**

| Example/Comparative example | Time (min) | | |
|---|---|---|---|
| | 0 | 30 | 60 |
| Example 1 | ⊚ | ⊚ | ⊚ |
| Example 7 | ⊚ | ⊚ | ⊚ |
| Example 9 | ⊚ | ⊚ | ⊚ |
| Example 14 | ⊚ | ⊚ | ⊚ |
| Example 17 | ⊚ | ⊚ | ⊚ |
| Comparative example 2 | Δ | × | × |
| Comparative example 3 | Δ | × | × |

As shown in Table 5, it was demonstrated that the powders containing oil-soluble substances of the present invention have stability even under hot water conditions.

### 4. Stability during high temperature treatment (dry)

Each of the powders (45.0 g each) obtained in Examples 1, 7, 9, 14, and 17 and Comparative examples 2 and 3 was uniformly spread within a beaker and then treated using a desktop hot-air incubator (DRY Z OVEN DZ-60, Asahi Kagaku Co., Ltd.) adjusted at 150°C for 30 minutes and 60 minutes. 28.3 g of purified water was added to 5.0 g of each treated powder. The powder mass ratio in each solution was adjusted to 15.0%. After mixing, each liquid mixture was transferred into a centrifugation tube. Each solution was centrifuged with an arbitrary centrifugal force using a centrifuge, and then the elution of an oil-soluble substance colored with an oil-soluble dye was observed. Centrifugation was carried out under conditions of 1.5°C for 10 minutes, and an arbitrary centrifugal force was applied. The results are shown in Table 6 below.

**Table 6**

| Example/Comparative example | Time (min) | Centrifugal force (g) | | | | |
|---|---|---|---|---|---|---|
| | | 0 | 2,000 | 5,000 | 8,000 | 12,000 |
| Example 1 | 30 | ⊚ | ⊚ | ⊚ | ⊚ | ⊚ |
| | 60 | ⊚ | ⊚ | ⊚ | ⊚ | ⊚ |
| Example 7 | 30 | ⊚ | ⊚ | ⊚ | ⊚ | ⊚ |
| | 60 | ⊚ | ⊚ | ⊚ | ⊚ | ⊚ |
| Example 9 | 30 | ⊚ | ⊚ | ⊚ | ○ | ○ |
| | 60 | ⊚ | ⊚ | ⊚ | ○ | ○ |
| Example 14 | 30 | ⊚ | ⊚ | ⊚ | ○ | ○ |
| | 60 | ⊚ | ⊚ | ⊚ | ⊚ | ○ |
| Example 17 | 30 | ⊚ | ⊚ | ⊚ | ⊚ | ⊚ |
| | 60 | ⊚ | ⊚ | ⊚ | ⊚ | ⊚ |
| Comparative example 2 | 30 | × | × | × | × | × |
| | 60 | × | × | × | × | × |
| Comparative example 3 | 30 | ○ | × | × | × | × |
| | 60 | ○ | × | × | × | × |

As shown in the results in Table 6, no oil-soluble substances were eluted from the powders containing oil-soluble substances of the present invention, even when the powders had been subjected to dry treatment at high temperature or when a strong centrifugal force had been applied, revealing that the powders have high stability.

Specifically, the results in the above stability tests revealed the following.

Based on the results of Examples 1 to 6 conducted with varied surfactant types, it was demonstrated that the powders containing oil-soluble substances of the present invention have stability regardless of surfactant type added and regardless of whether a surfactant is used alone or in combination. Moreover, based on the results of Examples 1 and 3, it was demonstrated that a surfactant may be added into an aqueous solution, into an oil-soluble substance, or into both. Furthermore, based on the results of Examples 1 and 11 to 13, it was demonstrated that the powders of the present invention have performance defined in the present invention regardless of the oil-soluble substance content in the powder, as long as the content is within the range as defined in the present invention.

In contrast, based on the results of Example 1 and Comparative example 1, it was demonstrated that powderization cannot be carried out when no surfactants have been added and that the presence of a surfactant enables the powder to exert the performance defined in the present invention.

As shown in the results of Example 14 and Comparative example 3, when preparation is carried out with procedures of addition that are similar to the production process defined in the present invention and when water-soluble dextrin is used instead of using a calcium component as a base material, powderization can be carried out, but the powderized base material is easily dissolved in an aqueous solution, as a result, the oil-soluble substance is eluted. Accordingly, it was demonstrated that the performance defined in the present invention results from a calcium component that is hardly-soluble in an aqueous solution.

Based on the results of Examples 1 and 7 to 10, it was demonstrated that the powders containing the oil-soluble substance of the present invention have stability regardless of oil-soluble substance types to be contained.

Based on the results of Examples 1 to 15 and Examples 16 and 17, it was demonstrated that the powders containing oil-soluble substances of the present invention have stability, even when pressure (centrifugal force) is applied, when they are allowed to stand in water over time, when they are left in hot water, when they are dried under high temperatures, that is when they are subjected to the environments and conditions of the present stability tests, regardless of the calcium component types used as base materials.

Based on the results of Examples 14 and 15, it was demonstrated that in the case of the method for producing an oil-soluble substance of the present invention, the powder of the present invention has stability even when a sub-base material such as a casein salt is added, as long as the addition of such sub-base material is carried out after the mixing of the oil-soluble substance, the calcium component, and the surfactant and after the adsorption of the oil-soluble substance to the calcium component. In contrast, based on the results of Comparative examples 2 and 4 to 6, it was demonstrated that when production is carried out by adding a sub-base material such as casein before the addition of a calcium component, successful powderization cannot always be achieved. Even if powderization is carried out, the ability of the resulting powder to retain an oil-soluble substance is weak and the powder lacks stability. Accordingly, it was demonstrated that a powder containing an oil-soluble substance having the performance defined in the present invention is obtained through the production process and the procedures for addition defined in the present invention. Furthermore, based on the results of Examples 1 to 13 and 17 and Examples 14 to 16, it was also demonstrated that the stability of the powders containing oil-soluble substances do not depend on a drying method.

### Flowability Test

Repose angles of the powders obtained in Examples 4 and 15 and Comparative examples 2, 3, and 6 were determined by an injection method using a multi tester MT-1000 (SEISHIN ENTRPRISE CO., LTD.). The repose angles used herein were determined by measuring the pile (pile of each powder) angle at 3 positions and then calculating mean values. Moreover, each repose angle index was determined based on a calibration scale. The results are shown in Table 7 below.

**Table 7**

| Example/Comparative example | Repose angle (θr) | Repose angle index |
|---|---|---|
| Example 4 | 47 | 12 |
| Example 15 | 48 | 12 |
| Comparative example 2 | 59 | 7 |
| Comparative example 3 | 62 | 7 |
| Comparative example 6 | 59 | 7 |

As shown in the results in Table 7, significant differences were observed between the repose angles of the powders containing oil-soluble substances prepared based on the present invention and those prepared in Comparative examples. The powders of the present invention had better flowability than those prepared in Comparative examples. Accordingly, it was demonstrated that the powders containing oil-soluble substances prepared based on the present invention have improved flowability compared with powders containing oil-soluble substances prepared by conventional technology, regardless of the presence or the absence of sub-base materials defined in the present invention.

All publications, patents, and patent applications cited herein are incorporated herein by reference in their entirety.

## Claims

1. A method for producing a powder containing an oil-soluble substance, which comprises dispersing an oil-soluble substance and a calcium component in an aqueous solution in the presence of a surfactant, and drying the obtained liquid mixture.

2. The method according to claim 1, wherein at least 1 type of sub-base material selected from the group consisting of a thickening and stabilizing agent, a protein, and a salt is further added after addition of the calcium component and before drying of the liquid mixture.

3. A powder containing an oil-soluble substance, which is obtained by the method according to claim 1 or 2.

4. A powder containing an oil-soluble substance, which contains an oil-soluble substance, a calcium component, and a surfactant, wherein the oil-soluble substance is adsorbed to calcium component particles, and from which substantially no oil-soluble substances are eluted in an aqueous solution.
